# EUROPÄISCHE PATENTSCHRIFT

(11) **EP 2 789 046 B1**
(45) Veröffentlichungstag und Bekanntmachung des Hinweises auf die Patenterteilung: **03.02.2016**
(21) Anmeldenummer: 12794643.2
(22) Anmeldetag: 27.11.2012
(51) Int. Cl.: H01M 10/60

(54) **VERFAHREN ZUM FERTIGEN EINER BATTERIE, BATTERIEANORDNUNG UND BAUKASTENSYSTEM**
METHOD FOR MANUFACTURING A BATTERY, BATTERY ARRANGEMENT AND MODULAR SYSTEM
PROCÉDÉ DE FABRICATION D'UNE BATTERIE, ENSEMBLE BATTERIE ET SYSTÈME MODULAIRE

(30) Priorität: 05.12.2011 DE 102011120234
(43) Veröffentlichungstag der Anmeldung: 15.10.2014
(73) Patentinhaber: Audi AG, 85045 Ingolstadt (DE)
(72) Erfinder: FEES, Heiner, 74321 Bietigheim-Bissingen (DE); MAISCH, Ralf, 74232 Abstatt (DE); TRACK, Andreas, 74343 Sachsenheim (DE); EICHHORN, Alexander, 75031 Eppingen (DE); HUDI, Ricky, 85092 Kasing (DE)
(74) Vertreter: Herbst, Matthias Heinz
(86) Internationale Anmeldenummer: PCT/EP2012/004881
(87) Internationale Veröffentlichungsnummer: WO 2013/083241

(56) Entgegenhaltungen:
- DE-A1-102008 034 887
- DE-A1-102008 059 966
- DE-A1-102009 058 810
- DE-A1-102010 013 025

## Beschreibung

Die Erfindung betrifft ein Verfahren zum Fertigen einer Batterie, bei welchem wenigstens ein Batteriemodul bereitgestellt wird, welches eine Mehrzahl von Batteriezellen umfasst, und bei welchem eine Kühleinrichtung an dem wenigstens einen Batteriemodul angeordnet wird. Des Weiteren betrifft die Erfindung eine Batterieanordnung und ein Baukastensystem zum Herstellen einer Batterie.

Elektrisch betriebene Kraftfahrzeuge beziehen die für den Antrieb notwendige Energie aus einer Batterie. Um eine lange Lebensdauer der Batterie sicherzustellen, wird im Betrieb Wärme von der Batterie abgeführt, diese also gekühlt. Hierbei ist es bekannt, zur Kühlung ein flüssiges Medium oder ein gasförmiges Medium vorzusehen.

Beispielsweise beschreibt die DE 10 2009 037 021 A1 eine Batterieeinheit für ein Hybridfahrzeug, bei welchem die Batterieeinheit einen Batteriekanal aufweist. Der Batteriekanal umfasst einen ersten Kanal, in welchem ein Abgasrohr des Hybridfahrzeugs und ein Kühlkanal angeordnet sind. Der Kühlkanal ist hierbei zwischen dem Kanal für das Abgasrohr und einer Unterseite der Batterieeinheit angeordnet. Zum Temperieren der Batterieeinheit kann Luft oder eine Kühlflüssigkeit durch den Kühlkanal geleitet werden.

Die DE 10 2009 058 808 A1 beschreibt eine Fahrzeugantriebsbatteriebaugruppe, welche eine Batteriezellengruppe und eine Kühlvorrichtung umfasst. Die Kühlvorrichtung umfasst ein Trägerbauteil, welches als verrippter Hohlkörper ausgebildet ist, in dem Verstärkungsrippen und U-förmige Halterungen für eine Kühlmittelleitung ausgeformt sind. Rastnasen auf beiden Seiten der Kühlmittelleitung sorgen für eine formschlüssige Befestigung der Kühlmittelleitung am Trägerbauteil. An dem Trägerbauteil ist eine federelastisch ausgebildete Kontaktplatte angeordnet, welche beim Anbringen der Kühlvorrichtung an der Batteriezellengruppe gegen eine Unterseite der Batteriezellengruppe vorgespannt wird.

Die DE 10 2009 058 810 A1 beschreibt ebenfalls eine Fahrzeugantriebsbatterie mit einer Batteriezellengruppe und einer Kühlvorrichtung. Ein Wärmeübertragungsbauteil der Kühlvorrichtung ist hierbei federelastisch ausgebildet und verläuft im nicht an einer Flachseite der Batteriezellengruppe befestigten Zustand konvex zur Flachseite. Das Wärmeübertragungsbauteil wird an die Flachseite der Batteriezellengruppe angeschraubt und hierbei elastisch vorgespannt. Kühlmittelleitungen sind mit dem Wärmeübertragungsbauteil in Anlage.

Die US 2008/025 12 46 A1 beschreibt eine Kühlstruktur für Batterien und elektrische Komponenten wie Steuergeräte und einen Wandler. Die Batterien und die elektrischen Komponenten sind hierbei in einem Aufnahmeraum im Fahrzeugboden eines Hybridfahrzeugs angeordnet. Zwei Gebläse dienen dem Kühlen der Batterien, wobei Kühlrippen der elektrischen Komponenten im Kühlluftstrom stromabwärts der Batterien angeordnet sind.

Des Weiteren beschreibt die EP 2 017 919 A1 eine Batterie mit einer Mehrzahl von Batteriezellen, welche in einem Gehäuse angeordnet sind. Durch das Gehäuse sind Kühlkanäle gebildet, welche wahlweise mit Kühlluft oder Kühlwasser beaufschlagt werden können.

Insbesondere bei Anordnung der Batterie in einem Fahrzeug müssen die spezifischen Bauraumverhältnisse berücksichtigt werden. Dies führt dazu, dass je nach Fahrzeugtyp und für den Fahrzeugtyp vorgesehener Kühlung - etwa Flüssigkeitskühlung oder Gaskühlung - unterschiedliche Kühleinrichtungen bereitzustellen sind.

Durch die unterschiedliche Gestaltung der Kühleinrichtungen ergibt sich eine große Anzahl an Varianten, wodurch die Fertigung vergleichsweise aufwändig und kostenintensiv wird. Außerdem müssen je nach Gestalt der Batteriemodule und der Kühleinrichtungen entsprechende Aufnahmesysteme geschaffen werden, was sich ebenso negativ auf den Aufwand und die Kosten bei der Fertigung auswirkt.

Aufgabe der vorliegenden Erfindung ist es daher, ein Verfahren der eingangs genannten Art sowie eine Batterieanordnung und ein Baukastensystem und zu schaffen, welches bzw. welche eine besonders einfache und kostengünstige Fertigung erlaubt.

Diese Aufgabe wird durch ein Verfahren mit den Merkmalen des Patentanspruchs 1, eine Batterieanordnung mit den Merkmalen des Patentanspruchs 9 und durch ein Baukastensystem mit den Merkmalen des Patentanspruchs 13 gelöst. Vorteilhafte Ausgestaltungen mit zweckmäßigen Weiterbildungen der Erfindung sind in den abhängigen Patentansprüchen angegeben.

Das erfindungsgemäße Verfahren zum Fertigen einer insbesondere zur Verwendung in einem Fahrzeug vorgesehenen Batterie umfasst folgende Schritte:
a) Bereitstellen wenigstens eines Batteriemoduls, welches eine Mehrzahl von Batteriezellen umfasst;
b) Ermitteln von Anforderungen an eine Kühleinrichtung für die Batterie, je nachdem ob für die Batterie eine Flüssigkeitskühlung oder eine Kühlung mit einem gasförmigen Medium zum Einsatz kommen soll;
c) Auswählen der Kühleinrichtung in Abhängigkeit davon, ob für das wenigstens eine Batteriemodul die Flüssigkeitskühlung oder die Kühlung mit einem gasförmigen Medium vorgesehen ist;
d) Anordnen zumindest eines ersten, von einer Kühlflüssigkeit durchströmbaren Kühlkörpers oder zumindest eines zweiten von dem gasförmigen Medium durchströmbaren Kühlkörpers an dem wenigstens einen Batteriemodul als Kühleinrichtung in Abhängigkeit von der in Schritt b) getroffenen Auswahl.

Es wird also je nach gewünschter Art der Kühlung der geeignete Kühlkörper an dem wenigstens einen Batteriemodul angeordnet. Dies ermöglicht es, ein einheitliches Batteriemodul zu verwenden, selbst wenn unterschiedliche Arten der Kühlung dieses Batteriemoduls vorgesehen sind. Durch einen solchen modularen Aufbau der Batterie lässt eine einfache und kostengünstige Fertigung realisieren. Hierbei wird also je nach gestellten Kühlanforderungen der geeignete Kühlkörper gewählt. Der erste Kühlkörper kann hierbei insbesondere diesbezüglich von dem zweiten Kühlkörper unterschiedlich sein, dass er an die Art des durch diesen hindurchleitenbaren Mediums angepasst ist.

Durch den Einsatz eines einheitlichen, insbesondere für unterschiedliche Fahrzeugtypen verwendbaren Batteriemoduls lassen sich die Entwicklungskosten und die Fertigungskosten für die Batterie reduzieren.

Das im Kühlbetrieb der Batterie verwendete Kühlmedium kann bei kalter Umgebungstemperatur und somit kalter Batterie auch zum anfänglichen Erwärmen des Batteriemoduls genutzt werden, damit dieses besonders rasch seine gewünschte Leistungsfähigkeit erreicht. Hierfür kann das im Kühlbetrieb zum Kühlen der Batterie verwendete Kühlmedium beheizt werden, um es dann dem noch vergleichsweise kalten Batteriemodul zuzuführen. Die Kühlflüssigkeit oder das gasförmige Kühlmedium kann also auch dem Erwärmen des Batteriemoduls dienen.

Bevorzugt wird der erste oder zweite Kühlkörper mit dem wenigstens einen Batteriemodul in Anlage gebracht, um im Kühlbetrieb ein besonders effizientes Abführen von Wärme von dem Batteriemodul sicherzustellen.

Wenn das Auswählen der Kühleinrichtung in Abhängigkeit von dem Vorsehen einer Flüssigkeitskühlung oder einer Kühlung mit dem gasförmigen Medium mittels einer Recheneinrichtung vorgenommen wird, lässt sich eine besonders rationelle Fertigung der Batterie erreichen.

Als weiter vorteilhaft hat es sich gezeigt, wenn der zumindest eine erste oder zweite Kühlkörper in einen Aufnahmeraum eingebracht wird, welcher zwischen einer Trageinrichtung und dem wenigstens einen Batteriemodul ausgebildet ist. So können die Trageinrichtung und das Batteriemodul unabhängig von der vorgesehenen Art der Kühlung als einheitliche, insbesondere für unterschiedliche Fahrzeugtypen nutzbare Baueinheiten bereitgestellt werden. Auf diese Weise lassen sich besonders geringe Entwicklungskosten und Fertigungskosten beim Herstellen der Batterie erreichen.

In dem Aufnahmeraum sind definierte Kühlflächen bereitgestellt, an welchen nach dem Einbringen des ersten oder zweiten Kühlkörpers in den Aufnahmeraum im Kühlbetrieb Wärme von dem Batteriemodul abgeführt wird. Der Aufnahmeraum selbst ist jedoch universell, also nicht abhängig davon, ob in diesem der Kühlkörper für die Flüssigkeitskühlung oder der Kühlkörper für die Kühlung mit gasförmigem Medium angeordnet werden sollen. Durch das Einbringen des jeweiligen Kühlkörpers in den Aufnahmeraum ergibt sich bei der Verwendung der Batterie für ein Fahrzeug eine fahrzeugspezifische Batterie.

In einer weiteren vorteilhaften Ausgestaltung wird durch den zumindest einen zweiten, von dem gasförmigen Medium durchströmbaren Kühlkörper wenigstens ein Kühlkanal gebildet, welcher zu zumindest einer Seite hin von der Trageinrichtung begrenzt ist. Dann lässt sich eine effiziente Wärmeabfuhr realisieren, ohne dass an den wenigstens einen Kühlkanal besondere Anforderungen hinsichtlich seiner Dichtigkeit gestellt zu werden brauchen.

Als weiter vorteilhaft hat es sich gezeigt, wenn als der zumindest eine erste, von der Kühlflüssigkeit durchströmbare Kühlkörper ein außenumfangsseitig geschlossener Hohlkörper an dem wenigstens einen Batteriemodul angeordnet wird. Dann ist der Kühlkörper unabhängig von im Zusammenwirken mit durch seinen Einbauort bestehenden Gegebenheiten besonders gut dazu ausgelegt, eine Flüssigkeitskühlung zu realisieren.

Bevorzugt ist es weiterhin, wenn als der zumindest eine erste oder zweite Kühlkörper ein durch Strangpressen gebildetes Profilteil an dem wenigstens einen Batteriemodul angeordnet wird. Dadurch sind die jeweiligen Kühlkörper einfach und kostengünstig herstellbar, und sie können besonders leicht auf die zum Kühlen des Batteriemoduls vorgesehene Länge gebracht werden.

Wenn der zumindest eine erste oder der zumindest eine zweite Kühlkörper aus einer Aluminiumlegierung gebildet ist, lässt sich über diesen Wärme besonders gut abführen. Dies gilt in besonderem Maße, wenn eine Kühlung durch ein gasförmiges Medium vorgesehen ist. Eine solche Kühlung kann insbesondere dadurch unterstützt werden, dass das gasförmige Medium im Kühlbetrieb an einer Mehrzahl von Kühlrippen des Kühlkörpers vorbeigeführt wird.

Vorteilhaft wird der zumindest eine erste, von der Kühlflüssigkeit durchströmbare Kühlkörper an dem wenigstens einen Batteriemodul angeordnet, wenn die Batterie für ein Elektrofahrzeug vorgesehen ist. Bei einem Elektrofahrzeug ist es nämlich von besonders großer Bedeutung, dass selbst verhältnismäßig viel Wärme besonders rasch abgeführt werden kann. Zudem lassen sich durch eine Flüssigkeitskühlung an die Kühlleistung gestellte Anforderungen besonders leicht erfüllen bzw. besonders genau einhalten. Bevorzugt wird der zumindest eine zweite, von dem gasförmigen Medium durchströmbare Kühlkörper an dem wenigstens einen Batteriemodul angeordnet, wenn die Batterie für ein Hybridfahrzeug vorgesehen wird. Durch eine Gaskühlung - und insbesondere Luftkühlung - lässt sich nämlich bei Hybridfahrzeugen auf einfache und für den Anwendungsfall ausreichende Art und Weise die gewünschte Kühlleistung einfach und sicher erreichen.

Schließlich hat es sich als vorteilhaft gezeigt, wenn wenigstens zwei Batteriemodule in die Strömungsrichtung eines Kühlmediums durch den jeweiligen Kühlkörper gesehen zusammen mit dem einem jeweiligen Batteriemodul zugeordneten zumindest einen Kühlkörper hintereinander und/oder nebeneinander und/oder übereinander in der Batterie angeordnet werden. Durch das Vorsehen einheitlicher Batteriemodule und diesen jeweils zugeordneter Kühlkörper brauchen nämlich nicht je nach Anordnung der Batteriemodule spezifische Kühleinrichtungen vorgesehen zu werden. Vielmehr können die Batteriemodule mit den diesen zugeordneten Kühlkörpern flexibel miteinander gekoppelt werden.

Wenn die Batteriemodule in Strömungsrichtung gesehen hintereinander angeordnet sind, so lassen sich auch die Kühlkörper besonders leicht fluidisch miteinander koppeln. Bei einer Anordnung der Batteriemodule mit den diesen zugeordneten Kühlkörpern übereinander oder nebeneinander werden hingegen entsprechende Zuleitungen zu Einlässen in die jeweiligen Kühlkörper vorgesehen und Ableitungen, welche an jeweilige Auslässe der Kühlkörper angeschlossen werden.

Die erfindungsgemäße Batterieanordnung, welche insbesondere für ein Fahrzeug vorgesehen ist, weist wenigstens ein Batteriemodul auf, welches eine Mehrzahl von Batteriezellen umfasst. Eine Trageinrichtung der Batterieanordnung ist zum Halten des wenigstens einen Batteriemoduls ausgebildet. Durch das wenigstens eine Batteriemodul und die Trageinrichtung ist ein Aufnahmeraum für zumindest einen Kühlkörper gebildet. Hierbei umfasst die Trageinrichtung oder das Batteriemodul wenigstens eine Führung, mittels welcher der zumindest eine Kühlkörper zumindest beim Eingebrachtwerden in den Aufnahmeraum in Anlage ist. Die Führung erleichtert das Einführen des für eine jeweils gewünschte Art der eine Flüssigkeitskühlung oder eine Kühlung mit einem gasförmigen Medium umfassenden Kühlung vorgesehenen Kühlkörpers in den Aufnahmeraum, sodass die Batterieanordnung je nach gewünschter Kühlung mit einem für den Anwendungsfall vorgesehenen Kühlkörper versehen werden kann.

Auf diese Weise kann ein von einer Kühlflüssigkeit durchströmbarer Kühlkörper einfach in den Aufnahmeraum eingebracht werden, wenn eine Flüssigkeitskühlung des Batteriemoduls vorgesehen ist. Alternativ kann ein von einem gasförmigen Kühlmedium durchströmbarer Kühlkörper in den Aufnahmeraum eingebracht werden, wenn eine Kühlung des wenigstens einen Batteriemoduls durch das gasförmige Medium vorgesehen ist. Es lässt sich eine einfache und kostengünstige Fertigung einer Batterie erreichen, indem der für den jeweiligen Anwendungsfall vorgesehene Kühlkörper an der wenigstens einen Führung geführt in den Aufnahmeraum eingebracht wird.

Die Trageinrichtung umfasst bevorzugt zwei im Querschnitt im Wesentlichen L-förmige Schienen, welche zum Abstützen des wenigstens einen Batteriemoduls ausgebildet sind. Dadurch geben die Schienen dem Batteriemodul von unten und zur Seite hin Halt, wenn das Batteriemodul auf den Schienen angeordnet wird.

Wenn die beiden Schienen durch Strangpressen gebildet sind, so lassen sie sich besonders einfach auf die zum Abstützen des wenigstens einen Batteriemoduls vorzusehende Länge bringen. Als robuster und zugleich leichter Werkstoff kann für die Schienen hierbei insbesondere eine Aluminiumlegierung verwendet werden.

Als weiter vorteilhaft hat es sich gezeigt, wenn die Trageinrichtung eine die beiden Schienen verbindende Tragplatte umfasst, wobei durch die Tragplatte, die beiden Schienen und einen Boden des wenigstens einen Batteriemoduls der Aufnahmeraum für den zumindest einen Kühlkörper bereitgestellt ist. So ist auf einfache Weise und mit kostengünstig und leicht verfügbaren Bauteilen der standardisierte Aufnahmeraum gebildet, in welchem wahlweise der von der Kühlflüssigkeit durchströmbare Kühlkörper oder der von dem gasförmigen Medium durchströmbare Kühlkörper angeordnet werden kann. Die Tragplatte kann insbesondere aus einem Kunststoff gebildet sein.

Schließlich hat es sich als vorteilhaft gezeigt, wenn die wenigstens eine Führung als Führungsleiste ausgebildet ist. Dann ist nämlich der zumindest eine Kühlkörper nicht nur beim Eingebrachtwerden desselben in den Aufnahmeraum in Anlage mit der Führungsleiste. Vielmehr fixiert die Führungsleiste zudem den in den Aufnahmeraum eingebrachten Kühlkörper einfach und sicher nach Art eines Anschlags. Dies gilt insbesondere, wenn der Kühlkörper zu beiden Seiten hin von jeweils einer Führungsleiste eingefasst ist. Besonders aufwandsarm kann die wenigstens eine Führungsleiste bereitgestellt werden, wenn sie einstückig mit der Tragplatte ausgebildet ist.

Das erfindungsgemäße Baukastensystem zum Herstellen einer Batterie umfasst wenigstens ein Batteriemodul mit einer Mehrzahl von Batteriezellen. Des weiteren ist eine zum Halten des wenigstens einen Batteriemoduls ausgebildete Trageinrichtung vorgesehen, sowie zumindest eine an dem wenigstens einen Batteriemodul anordenbare Kühleinrichtung. Hierbei umfasst die wenigstens eine Kühleinrichtung einen ersten, von einer Kühlflüssigkeit durchströmbaren Kühlkörper und/oder einen zweiten, von einem gasförmigen Medium durchströmbaren Kühlkörper. Durch das wenigstens eine Batteriemodul und die Trageinrichtung ist ein Aufnahmeraum für zumindest einen der Kühlkörper ausbildbar, wobei der Aufnahmeraum universell für das Anordnen des ersten oder des zweiten Kühlkörpers ausgebildet ist. So kann entweder das zum Herstellen einer Batterie mit Flüssigkeitskühlung vorgesehene Baukastensystem verwendet werden oder das zum Herstellen einer Batterie mit Gas bzw. Luftkühlung vorgesehene Baukastensystem, oder das Baukastensystem kann beide Kühlkörper umfassen, sodass wahlweise der gewünschte Kühlkörper an dem Batteriemodul angeordnet werden kann.

Die für das erfindungsgemäße Verfahren und die erfindungsgemäße Batterieanordnung beschriebenen Vorteile und bevorzugten Ausführungsformen gelten auch für das erfindungsgemäße Baukastensystem und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: ausschnittsweise in einer Schnittansicht eine Batterie mit Flüssigkeitskühlung;
- Fig. 2: ausschnittsweise und in einer Schnittansicht eine gleich aufgebaute Batterie, jedoch mit Luftkühlung; und
- Fig. 3: ein Ablaufdiagramm, welches die Fertigung einer Batterie veranschaulicht, bei welcher wahlweise eine Flüssigkeitskühlung oder eine Gaskühlung zum Einsatz kommt.

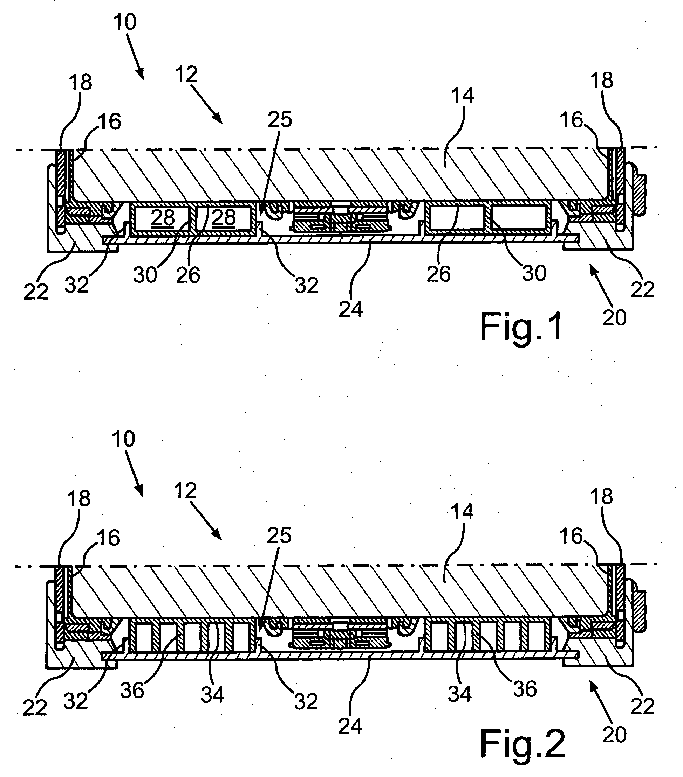

Von einer Batterie 10, welche insbesondere als Fahrzeugbatterie ausgebildet sein kann, ist in Fig. 1 geschnitten ein Batteriemodul 12 gezeigt, welches eine Mehrzahl von Batteriezellen 14 umfasst. Die Batteriezellen 14 sind durch so genannte Separatoren oder Spacer 16 elektrisch voneinander isoliert. Seitlich ist das Batteriemodul 12 von jeweiligen Seitenplatten 18 begrenzt, welche auch als Binder bezeichnet werden. Die Seitenplatten 18 fixieren die Spacer 16 relativ zueinander, und sie verbinden (vorliegend nicht gezeigte) Endplatten des Batteriemoduls 12 miteinander, welche das Batteriemodul 12 zu seinen Stirnseiten hin abschließen.

Die Batterie 10 umfasst des Weiteren eine Trageinrichtung 20, welche zwei im Querschnitt L-förmige Schienen 22 umfasst, welche bevorzugt als Strangpressprofile aus einer Aluminiumlegierung gebildet sind. Die Schienen 22, welche an jeweiligen Eckbereichen des Batteriemoduls 12 angeordnet sind, stützen das Batteriemodul 12 von unten, und sie fassen das Batteriemodul 12 zu den Seiten hin ein.

Die beiden Schienen 22 sind durch eine Tragplatte 24 miteinander verbunden, deren Enden - wie vorliegend beispielhaft gezeigt - in Längsnuten eingebracht sind, welche in den beiden Schienen 22 ausgebildet sind. In alternativen Ausführungsformen können andere Arten der Anbindung der Tragplatte 24 an die Schienen 22 realisiert sein.

Durch die Tragplatte 24 ist zur Unterseite hin ein Aufnahmeraum 25 begrenzt, welcher nach oben hin durch einen Boden des Batteriemoduls 12 begrenzt ist. In diesen Aufnahmeraum 25 sind bei der in Fig. 1 gezeigten Batterie 10 zwei als geschlossene Hohlkörper ausgebildete Kühlkörper 26 eingebracht, welche sowohl mit der Tragplatte 24 als auch mit dem Boden des Batteriemoduls 12 in Anlage sind.

Diese Kühlkörper 26 sind zur Flüssigkeitskühlung des Batteriemoduls 12 vorgesehen, d. h. sie werden im Kühlbetrieb von einer Kühlflüssigkeit durchströmt. Auf diese Weise kann besonders viel Wärme von dem Batteriemodul 12 abgeführt werden. Daher kann eine derartige Kühleinrichtung insbesondere dann vorgesehen werden, wenn die Batterie 10 in einem Elektrofahrzeug zum Einsatz kommen soll, welches ausschließlich die von der Batterie 10 bereitgestellte elektrische Energie für die Fortbewegung nutzt. Kühlkanäle 28 des jeweiligen Kühlkörpers 26 können durch eine Trennwand 30 oder auch durch mehrere Trennwände voneinander abgegrenzt sein.

Einstückig mit der Tragplatte 24 ausgebildete Führungsschienen 32 fassen die vorliegend zwei Kühlkörper 26 seitlich ein, und sie erleichtern das Einschieben der Kühlkörper 26 in den Aufnahmeraum 25. Wenn die jeweiligen Kühlkörper 26 in den Aufnahmeraum 25 eingebracht werden, sind sie mit den beiden diese jeweils seitlich einfassenden Führungsleisten 32 in Anlage. Zudem sichern die Führungsleisten 32 die Kühlkörper 26 in ihrer Lage im Aufnahmeraum 25.

Insbesondere in Zusammenschau mit Fig. 2 wird deutlich, dass für dasselbe Batteriemodul 12 und dieselbe Trageinrichtung 20 der Batterie 10 alternativ auch eine Luftkühlung oder Gaskühlung zum Einsatz kommen kann. Bei der in Fig. 2 gezeigten Ausführungsform der Batterie 10 sind nämlich in den Aufnahmeraum 25 jeweils in die von den beiden Führungsleisten 32 seitlich begrenzten Bereiche zwei Kühlkörper 34 eingebracht, welche für das Kühlen des Batteriemoduls 12 mittels Luft oder einem derartigen gasförmigen Medium vorgesehen sind.

Die beiden Kühlkörper 34 sind so wie die für die Flüssigkeitskühlung vorgesehenen Kühlkörper 26 ebenfalls zwischen der Tragplatte 24 einerseits und dem Batteriemodul 12 andererseits angeordnet, und sie sind mit den Batteriezellen des Batteriemoduls 12 in Anlage. Bei der in Fig. 2 gezeigten Batterie 10 sind die beiden Kühlkörper 34 als zur Unterseite hin offene Profilteile ausgebildet, welche eine Mehrzahl von Kühlrippen 36 aufweisen. Durch die Kühlrippen 36 voneinander abgegrenzte Kühlkanäle sind nach unten von der Tragplatte 24 begrenzt.

Während die Kühlkörper 26, 34 sowie die Schienen 22 bevorzugt aus einer Aluminiumlegierung durch Strangpressen gebildet sind, kann für die Tragplatte 24 insbesondere ein Kunststoff zum Einsatz kommen.

Die eine Luftkühlung aufweisende Batterie 10 (vgl. Fig. 2) kann insbesondere bei einem Hybridfahrzeug zum Einsatz kommen, bei welchem die Anforderungen an die Kühlung der Batterie 10 geringer sind als bei einem rein elektrisch betriebenen Fahrzeug.

Die Batterie 10 kann also wahlweise mit für eine Flüssigkeitskühlung vorgesehenen Kühlkörpern 26 bestückt werden (vgl. Fig. 1) oder mit für eine Luftkühlung vorgesehenen Kühlkörpern 34 (vgl. Fig. 2), wobei für beide Arten von Kühlkörpern 26, 34 jeweils der standardisierte Aufnahmeraum 25 vorgesehen ist.

In dem Aufnahmeraum 25 sind zudem die Führungsleisten 32 vorgesehen, welche das Einführen des für die jeweils gewünschte Art der Kühlung vorgesehenen Kühlkörpers 26, 34 erleichtern und den jeweiligen Kühlkörper 26, 34 in seiner Lage fixieren.

Es sind also vorliegend ein standardisiertes Batteriemodul 12 sowie eine standardisierte Trageinrichtung 20 bereitgestellt, welche je nach gewünschter Kühlung der Batterie 10 mit dem geeigneten Kühlkörper 26, 34 versehen werden können. Es brauchen daher nicht auf die jeweilige Gestalt der Batterie 10 zugeschnittene, spezifische Kühleinrichtungen bereitgestellt zu werden, sondern es kann je nach gewünschter Art der Kühlung der geeignete Kühlkörper 26, 34 in den Aufnahmeraum 25 eingebracht werden.

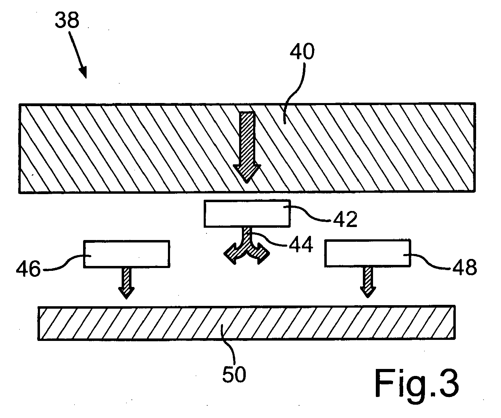

In Fig. 3 ist anhand eines Flussdiagramms 38 ein Verfahren veranschaulicht, bei welchem je nach für eine Batterie 10 gewünschter Kühlung die Batterie 10 fahrzeugspezifisch mit dem geeigneten Kühlkörper 26, 34 versehen wird.

In einem Schritt 40 werden das einheitliche Batteriemodul 12 und die einheitliche Trageinrichtung 20 bereitgestellt. Anschließend werden in einem Schritt 42 Anforderungen an das Kühlsystem für die gewünschte Batterie 10 ermittelt. Daraufhin wird in einem Schritt 44 eine Auswahl des Kühlsystems getroffen, je nachdem ob für die Batterie 10 eine Flüssigkeitskühlung oder eine Luft- oder Gaskühlung zum Einsatz kommen soll.

Wenn eine Flüssigkeitskühlung für die Batterie 10 vorgesehen ist, so wird in einem Schritt 46 der von einer Kühlflüssigkeit durchströmbare Kühlkörper 26 in den Aufnahmeraum 25 eingebracht, welcher zwischen der Trageinrichtung 20 und dem Boden des Batteriemoduls 12 ausgebildet ist.

Wird hingegen im Schritt 44 die Luftkühlung für die Batterie 10 gewählt, so wird in einem Schritt 48 der von Gas oder Luft durchströmbare Kühlkörper 34 in dem zwischen der Trageinrichtung 20 und dem Boden des Batteriemoduls 12 ausgebildeten Aufnahmeraum 25 angeordnet.

In beiden Fällen wird in einem Schritt 50 eine an die fahrzeugspezifischen Kühlanforderungen angepasste Batterie 10 bereitgestellt, welche modular aufgebaut ist und so Entwicklungskosten und Fertigungskosten besonders stark verringert.

In der für das jeweilige Fahrzeug vorgesehenen Batterie 10 können auch eine Mehrzahl von Batteriemodulen 12 vorgesehen sein. Wenn diese Batteriemodule 12 hintereinander angeordnet werden, so lassen sich die Trageinrichtung 20 und die Kühlkörper 26, 34 besonders leicht auf die für mehrere Batteriemodule 12 vorgesehene Länge bringen.

Die Batteriemodule 12 können jedoch auch nebeneinander angeordnet werden, wobei dann bevorzugt je Batteriemodul 12 eine Trageinrichtung 20 vorzusehen ist, welche die entsprechende Länge aufweist. Auch die Kühlkörper werden dann bevorzugt auf die den jeweiligen Batteriemodulen 12 entsprechende Länge gebracht. Zum Kühlen der Batterie 10 brauchen dann lediglich entsprechend Kühlflüssigkeitsleitungen oder Kühlluftleitungen an die jeweiligen Kühlkörper 26, 34 angeschlossen zu werden. Dies gilt in analoger Weise, wenn die Batteriemodule 12 mit den diesen zugeordneten Trageinrichtungen 20 und Kühlkörpern 26, 34 übereinander gestapelt im Fahrzeug angeordnet werden.

## Patentansprüche

1. Verfahren zum Fertigen einer Batterie (10), insbesondere für ein Fahrzeug, mit den Schritten:
a) Bereitstellen wenigstens eines Batteriemoduls (12), welches eine Mehrzahl von Batteriezellen (14) umfasst,
b) Ermitteln von Anforderungen an eine Kühleinrichtung (26, 34) für die Batterie (10), je nachdem ob für die Batterie (10) eine Flüssigkeitskühlung oder eine Kühlung mit einem gasförmigen Medium zum Einsatz kommen soll,
c) Auswählen (44) der Kühleinrichtung (26, 34) in Abhängigkeit davon, ob für das wenigstens eine Batteriemodul (12) die Flüssigkeitskühlung oder die Kühlung mit einem gasförmigen Medium vorgesehen ist, und
d) Anordnen zumindest eines ersten, von einer Kühlflüssigkeit durchströmbaren Kühlkörpers (26) oder zumindest eines zweiten, von dem gasförmigen Medium durchströmbaren Kühlkörpers (34) an dem wenigstens einen Batteriemodul (12) als Kühleinrichtung in Abhängigkeit von der in Schritt b) getroffenen Auswahl, wobei der zumindest eine erste, von einer Kühlflüssigkeit durchströmbare Kühlkörper (26) an dem wenigstens einen Batteriemodul (12) angeordnet wird, wenn die Batterie (10) für ein Elektrofahrzeug vorgesehen wird, und der zumindest eine zweite, von dem gasförmigen Medium durchströmbare Kühlkörper (34), wenn die Batterie (10) für ein Hybridfahrzeug vorgesehen wird.

2. Verfahren nach Anspruch 1,
**dadurch gekennzeichnet, dass**
das Auswählen (44) in Schritt b) von einer Recheneinrichtung vorgenommen wird.

3. Verfahren nach Anspruch 1 oder 2,
**dadurch gekennzeichnet, dass**
der zumindest eine erste oder zweite Kühlkörper (26, 34) in einen Aufnahmeraum (25) eingebracht wird, welcher zwischen einer Trageinrichtung (20) und dem wenigstens einen Batteriemodul (12) ausgebildet ist.

4. Verfahren nach Anspruch 3,
**dadurch gekennzeichnet, dass**
durch den zumindest einen zweiten, von dem gasförmigen Medium durchströmbaren Kühlkörper (34) wenigstens ein Kühlkanal gebildet wird, welcher zu zumindest einer Seite hin von der Trageinrichtung (20) begrenzt ist.

5. Verfahren nach einem der Ansprüche 1 bis 4,
**dadurch gekennzeichnet, dass**
als der zumindest eine erste, von der Kühlflüssigkeit durchströmbare Kühlkörper (26) ein außenumfangsseitig geschlossener Hohlkörper an dem wenigstens einen Batteriemodul (12) angeordnet wird.

6. Verfahren nach einem der Ansprüche 1 bis 5,
**dadurch gekennzeichnet, dass**
als der zumindest eine erste oder zweite Kühlkörper (26, 34) ein, insbesondere aus einer Aluminiumlegierung, durch Strangpressen gebildetes Profilteil an dem wenigstens einen Batteriemodul (12) angeordnet wird.

7. Verfahren nach einem der Ansprüche 1 bis 6,
**dadurch gekennzeichnet, dass**
wenigstens zwei Batteriemodule (12) in die Strömungsrichtung eines Kühlmediums durch den jeweiligen Kühlkörper (26, 34) gesehen zusammen mit dem einem jeweiligen Batteriemodul (12) zugeordneten zumindest einen Kühlkörper (26, 34) hintereinander und/oder nebeneinander und/oder übereinander in der Batterie (10) angeordnet werden.

8. Batterieanordnung, insbesondere für ein Fahrzeug, mit wenigstens einem Batteriemodul (12), welches eine Mehrzahl von Batteriezellen (14) umfasst, mit einer Trageinrichtung (20), welche zum Halten des wenigstens einen Batteriemoduls (12) ausgebildet ist, wobei durch das wenigstens eine Batteriemodul (12) und die Trageinrichtung (20) ein Aufnahmeraum (25) für zumindest einen Kühlkörper (26, 34) gebildet ist, und wobei die Trageinrichtung (20) oder das Batteriemodul (12) wenigstens eine Führung (32) umfasst, mit welcher der zumindest eine Kühlkörper (26, 34) zumindest beim Eingebrachtwerden in den Aufnahmeraum (25) in Anlage ist, wobei die wenigstens eine Führung (32) das Einführen des für eine jeweils gewünschte Art der eine Flüssigkeitskühlung oder eine Kühlung mit einem gasförmigen Medium umfassenden Kühlung vorgesehenen Kühlkörpers (26, 34) in den Aufnahmeraum (25) erleichtert, **dadurch gekennzeichnet, dass**
die Trageinrichtung (20) zwei im Querschnitt L-förmige, zum Abstützen des wenigstens einen Batteriemoduls (12) ausgebildete Schienen (22) umfasst.

9. Batterieanordnung nach Anspruch 8,
**dadurch gekennzeichnet, dass**
die Schienen (22), insbesondere aus einer Aluminiumlegierung, durch Strangpressen gebildet sind.

10. Batterieanordnung nach Anspruch 9,
**dadurch gekennzeichnet, dass**
die Trageinrichtung (20) eine die beiden Schienen (22) verbindende, insbesondere aus einem Kunststoff gebildete, Tragplatte (24) umfasst, wobei durch die Tragplatte (24), die beiden Schienen (22) und einen Boden des wenigstens einen Batteriemoduls (12) der Aufnahmeraum (25) für den zumindest einen Kühlkörper (26, 34) bereitgestellt ist.

11. Batterieanordnung nach Anspruch 10,
**dadurch gekennzeichnet, dass**
die wenigstens eine Führung als, insbesondere einstückig mit der Tragplatte (24) ausgebildete, Führungsleiste (32) ausgebildet ist.

12. Baukastensystem zum Herstellen einer Batterie (10), insbesondere für ein Fahrzeug, mit wenigstens einem Batteriemodul (12), welches eine Mehrzahl von Batteriezellen (14) umfasst, mit einer zum Halten des wenigstens einen Batteriemoduls (12) ausgebildeten Trageinrichtung (20) und mit zumindest einer an dem wenigstens einen Batteriemodul (12) anordenbaren Kühleinrichtung (26, 34), wobei die wenigstens eine Kühleinrichtung einen ersten, von einer Kühlflüssigkeit durchströmbaren Kühlkörper (26) und einen zweiten, von einem gasförmigen Medium durchströmbaren Kühlkörper (34) umfasst, wobei durch das wenigstens eine Batteriemodul (12) und die Trageinrichtung (20) ein Aufnahmeraum (25) für einen der Kühlkörper (26, 34) ausbildbar ist, wobei der Aufnahmeraum (25) universell für das Anordnen des ersten oder des zweiten Kühlkörpers (26, 34) ausgebildet ist und wobei die Trageinrichtung (20) zwei im Querschnitt L-förmige, zum Abstützen des wenigstens einen Batteriemoduls (12) ausgebildete Schienen (22) umfasst.

## Claims

1. Method of producing a battery (10), more particularly for a motor vehicle, encompassing the steps:
a) provision of at least one battery module (12) which comprises a plurality of battery cells (14),
b) determination of requirements relating to a cooling device (26, 34) for the battery (10), depending on whether liquid cooling or cooling with a gaseous medium is to be used for the battery (10),
c) selection (44) of the cooling device (26, 34) depending on whether liquid cooling or cooling with a gaseous medium is envisaged for the at least one battery module (12),
d) arranging at least a first cooling body (26), through which a cooling fluid can flow, or at least a second cooling body (34), through which the gaseous medium can flow, on the at least one battery module (12) as a cooling device, depending on the selection made in step b), wherein the at least one first cooling body (26), through which a cooling fluid can flow, is arranged on the at least one battery module (12) if the battery (10) is intended for an electric vehicle, and the at least second cooling body (34), through which the gaseous medium can flow, if the battery (10) is intended for a hybrid vehicle

2. Method according to claim 1
**characterised in that**
the selection (44) in step b) is made by a computing device.

3. Method according to claim 1 or 2
**characterised in that**
the at least one first or second cooling body (23, 34) is inserted into a receptacle space (25) which is formed between a carrier unit (20) and the at least one battery module (12).

4. Method according to claim 3
**characterised in that**
through the at least one second cooling body (34), through which the gaseous medium can flow, at least one cooling channel is formed, which on at least one side is delimited by the carrier device (20).

5. Method according to any least one of claims 1 to 4
**characterised in that**
as the at least first cooling body (26), through with the cooling fluid can flow, a externally circumferentially closed hollow body is arranged on the at least one battery module (12).

6. Method according to any one of claims 1 to 5
**characterised in that**
as the at least first or second cooling body (26, 34), a profile component, more particularly made of an aluminium alloy by means of extrusion moulding, is arranged on the at least one battery module (12).

7. Method according to any one of claims 1 to 6
**characterised in that**
at least two battery modules (12) seen in the direction of flow of a cooling medium through each of the cooling bodies (26, 34), together with the at least one cooling body (26, 34) assigned to the relevant battery module (12) are arranged behind each other and/or next to each other and/or on top of each other in the battery (10).

8. Battery arrangement, more particularly for a vehicle, with at least one battery module (12) which comprises a plurality of battery cells (14), with a carrier device (20) designed for holding the at least one battery module (12), wherein through the at least one battery module (12) and the carrier device (20) a receptacle space (25) for at least one cooling body (26, 34) is formed, and wherein the carrier device (20) or the battery module (12) comprises at least one guide (32) with which the at least one cooling body (26, 34) is in contact, at least during insertion into the receptacle space (25), wherein the at least one guide (32) facilitates the insertion into the receptacle space (25) of a cooling body (26, 34) for a desired type of cooling, consisting of fluid cooling or cooling with a gaseous medium, **characterised in that**
the carrier device (20) comprises two rails (22), which are L-shaped in cross-section, for supporting the at least one battery module (12).

9. Battery arrangement according to claim 8
**characterised in that**
the rails (22) are, more particularly, made of an aluminium alloy by means of extrusion moulding.

10. Battery arranged according to claim 9
**characterised in that**
the carrier device (20) comprises a carrier plate (24), more particularly made of plastic, which connects the two rails (22), wherein through the carrier plate (24), the two rails (22) and a base of the at least one battery module (12) the receptacle space (25) for the at least one cooling body (26, 34) is provided.

11. Battery arrangement according to claim 10
**characterised in that**
the at least one guide is designed as a guide bar (32), more particularly in one piece with the carrier plate (24).

12. Modular assembly system for producing a battery (10), more particularly for a vehicle with at least one battery module (12) which comprises a plurality of battery cells (14), with a carrier device (20) for holding the at least one battery module (12) and with at least one cooling device (26, 34) which can be arranged on the at least one battery module (12), wherein the at least one cooling device comprises a first cooling body (26), through which a cooling fluid can flow, and a second cooling body (34), through which a gaseous medium can flow, wherein through the at least one battery module (12) and the carrier unit (20) a receptacle space (25) for a cooling body (26, 34) is formed, wherein the receptacle space (25) is universally formed for arranging the first or the second cooling body (26, 34) and wherein the carrier device (20) comprises two rails (22), which are L-shaped in cross-section, for supporting the at least one battery module (12).

## Revendications

1. Procédé de fabrication d'une batterie (10), notamment pour un véhicule, avec les étapes de :
a) fourniture d'au moins un module de batterie (12) qui comprend une multiplicité de cellules de batterie (14),
b) détermination d'exigences à satisfaire par un dispositif de refroidissement (26, 34) pour la batterie (10), selon qu'un refroidissement par liquide ou un refroidissement par gaz doit être utilisé pour la batterie (10),
c) sélection (44) du dispositif de refroidissement (26, 34) en fonction du type de refroidissement, par liquide ou par gaz, qui est prévu pour l'au moins un module de batterie (12),
d) agencement d'au moins un premier corps de refroidissement (26), traversable par un liquide de refroidissement, ou d'au moins un deuxième corps de refroidissement (34), traversable par un gaz, sur l'au moins un module de batterie (12) comme dispositif de refroidissement en fonction de la sélection opérée à l'étape b), l'au moins un premier corps de refroidissement (26) traversable par un liquide de refroidissement étant agencé sur l'au moins un module de batterie (12) lorsque la batterie (10) est prévue pour un véhicule électrique et l'au moins un deuxième corps de refroidissement (34) traversable par un gaz étant agencé sur l'au moins un module de batterie lorsque la batterie (10) est prévue pour un véhicule hybride.

2. Procédé selon la revendication 1, **caractérisé en ce que** la sélection (44) à l'étape b) est effectuée par un ordinateur.

3. Procédé selon la revendication 1 ou 2, **caractérisé en ce que** l'au moins un premier ou deuxième corps de refroidissement (26, 34) est placé dans un espace de logement (25) qui est conçu entre un dispositif porteur (20) et l'au moins un module de batterie (12).

4. Procédé selon la revendication 3, **caractérisé en ce qu'**au moins un canal de refroidissement, qui est limité d'au moins un côté par le dispositif porteur (20), est formé par l'au moins un deuxième corps de refroidissement (34) traversable par un gaz.

5. Procédé selon l'une des revendications 1 à 4, **caractérisé en ce qu'**un corps creux, fermé côté circonférence extérieure, est agencé comme l'au moins un premier corps de refroidissement (26) traversable par un liquide sur l'au moins un module de batterie (12).

6. Procédé selon l'une des revendications 1 à 5, **caractérisé en ce qu'**une pièce profilée formée par extrusion notamment d'un alliage d'aluminium est agencée comme l'au moins un premier ou deuxième corps de refroidissement (26, 34) sur l'au moins un module de batterie (12).

7. Procédé selon l'une des revendications 1 à 6, **caractérisé en ce qu'**au moins deux modules de batterie (12) sont agencés dans la batterie (10), l'un derrière l'autre et/ou l'un à côté de l'autre et/ou l'un au-dessus de l'autre, vus dans le sens d'écoulement d'un fluide à travers le corps de refroidissement respectif (26, 34), conjointement à l'au moins un corps de refroidissement (26, 34) associé au module de batterie respectif (12).

8. Dispositif de batterie, notamment pour un véhicule, avec au moins un module de batterie (12) qui comprend une multiplicité de cellules de batterie (14), avec un dispositif porteur (20) qui est conçu pour tenir l'au moins un module de batterie (12), un espace de logement (25) pour au moins un corps de refroidissement (26, 34) étant formé par l'au moins un module de batterie (12) et par le dispositif porteur (20) et le dispositif porteur (20) ou le module de batterie (12) comprenant au moins un guide (32) avec lequel l'au moins un corps de refroidissement (26, 34) vient s'appuyer au moins lors de l'insertion dans l'espace de logement (25), l'au moins un guide (32) facilitant l'introduction, dans l'espace de logement (25), du corps de refroidissement (26, 34) prévu pour un refroidissement comprenant le type respectivement souhaité de refroidissement par liquide ou par gaz,
**caractérisé en ce que** le dispositif porteur (20) comprend deux rails (22) conçus avec une section transversale en forme de L pour soutenir l'au moins un module de batterie (12).

9. Dispositif de batterie selon la revendication 8, **caractérisé en ce que** les rails (22) sont formés par extrusion, notamment d'un alliage d'aluminium.

10. Dispositif de batterie selon la revendication 9, **caractérisé en ce que** le dispositif porteur (20) comprend une plaque porteuse (24) qui relie les deux rails (22) et qui est conçue notamment en plastique, l'espace de logement (25) pour l'au moins un corps de refroidissement (26, 34) étant fourni par la plaque porteuse (24), les deux rails (22) et un fond de l'au moins un module de batterie (12).

11. Dispositif de batterie selon la revendication 10, **caractérisé en ce que** l'au moins un guide est conçu comme une baguette de guidage (32) conçue notamment d'un seul tenant avec la plaque porteuse (24).

12. Système modulaire pour la fabrication d'une batterie (10), notamment pour un véhicule, avec au moins un module de batterie (12) qui comprend une multiplicité de cellules de batterie (14), avec un dispositif porteur (20) qui est conçu pour tenir l'au moins un module de batterie (12) et avec au moins un dispositif de refroidissement (26, 34) qui peut être agencé avec l'au moins un module de batterie (12), l'au moins un dispositif de refroidissement comprenant un premier corps de refroidissement (26) traversable par un liquide de refroidissement ou un deuxième corps de refroidissement (34) traversable par un gaz, un espace de logement (25) pour l'un des corps de refroidissement (26, 34) pouvant être formé par l'au moins un module de batterie (12) et par le dispositif porteur (20), l'espace de logement (25) étant conçu de manière universelle pour l'agencement du premier ou du deuxième corps de refroidissement (26, 34) et le dispositif porteur (20) comprenant deux rails (22) conçus avec une section transversale en forme de L pour soutenir l'au moins un module de batterie (12).
